(19) Europäisches Patentamt

European Patent Office

Office européen des brevets

(11) **EP 1 700 828 A1**

(12) **EUROPEAN PATENT APPLICATION**

(43) Date of publication:
**13.09.2006 Bulletin 2006/37**

(51) Int Cl.:
***C03B 19/06*** (2006.01)   ***C03B 32/00*** (2006.01)
***C01B 33/18*** (2006.01)

(21) Application number: **05005091.3**

(22) Date of filing: **09.03.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **Degussa AG
40474 Düsseldorf (DE)**

(72) Inventors:
• **Oswald Monika
 63454 Hanau (DE)**
• **Meyer Jürgen
 63811 Stockstadt (DE)**
• **Deller Klaus
 63512 Hainburg (DE)**

(54) **Method for producing ultra-high purity, optical quality, glass articles**

(57)    A method for producing ultra-high purity, optical quality, glass articles is disclosed which involves:

1. compacting metaloxide or metalloidoxide to granules having a mean particle size of less than about 1 millimeter;

2. optionally fully sintering the granules to produce high purity, artificial sand;

3. casting the granules or artificial sand by conventional techniques, such as, slip casting, to form a high density, porous, green body;

4. optionally drying and partially sintering the green body;

5. optionally fully sintering the green body under vacuum; and

6. optionally hot isostatic pressing the fully sintered green body

whereby the metal oxide or metalloid oxides is a pyrogenic silicon dioxide powder with a BET surface area of 30 to 90 $m^2/g$, a DBP index of 80 or less, a mean aggregate area of less than 25000 $nm^2$ and a mean aggregate circumference of less than 1000 nm, wherein at least 70% of the aggregates have a circumference of less than 1300 nm or a high-purity pyrogenically prepared silicon dioxide having metal contents of less than 0.2 $\mu g/g$.

EP 1 700 828 A1

## Description

This invention relates to a method for producing ultra-high purity, optical quality glass articles.

Numerous investigators have attempted to apply the sol-gel technique to the production of optical quality glass products.

For example, Matsuyama et al., UK patent application No. GB 2,041,913, describes a gel casting method for producing "mother rods" from which optical waveguide fibers can be prepared wherein a solution of a silicon alkoxide is formed, allowed to gel so as to produce a porous preform, dried, and then sintered at a temperature below its melting temperature to produce the mother rod. The application describes a three step sintering process in which an atmosphere of oxygen and helium is used up to a temperature of 700 °C, an atmosphere of chlorine and helium is used between 700 °C and 1000 °C and an atmosphere of just helium is used above 1000 °C.
As acknowledged in this application, drying the gel without cracking is difficult and can take as long as 10 days.

In addition to the foregoing, sol-gel casting processes have also been described in Hansen et al., U.S. Pat. No. 3,535,890, Shoup, U.S. Pat. No. 3,678,144, Blaszyk et al., U.S. Pat. No. 4,112,032, Bihuniak et al., U.S. Pat. Nos. 4,042,361, and 4,200,445, and Scherer, U.S. Pat. No. 4,574,063, European patent publication No. 84,438, and Scherer et al., "Glasses from Colloids", Journal of Non-Crystalline Solids, 63: 163-172 (1984).

In particular, the Hansen et al. patent relates to a process in which an aqueous solution of colloidal silica particles is formed, dried to produce a gel, and the gel is sintered in a three step process, the first step comprising heating the gel to around 600 °C in a vacuum, the second step comprising flushing the gel with chlorine gas to remove bound water, and the third step comprising sintering the gel under vacuum by raising its temperature to 1200 °C The patent acknowledges the gel's high sensitivity to cracking during the drying process and states that drying times on the order of many days or weeks are needed to overcome this problem.

The Bihuniak et al. patents describe processes for densifying fumed silica and other fumed metal oxides by forming a sol, drying the sol to form fragments, and densifying the fragments by calcining them at 1150-1500 °C. Thereafter, the densified material can be milled, e.g., to an 8 to 10 micron average particle size, suspended in a casting medium, slip cast to form a porous preform, and fired to produce the desired finished product.

Because it employs fumed silica, the Bihuniak et al. process is more difficult to perform than the process of the present invention. For example, it is relatively difficult to form gels from fumed silica, and as acknowledged in the Bihuniak et al. patents, once formed, gels made from fumed silica tend to break up into large chunks, rather than small particles, as is desired. Further, extensive pollution abatement equipment is required to produce fumed silica since such production involves the creation of hydrochloric acid.

In addition, densified silica particles made from fumed silica tend to have higher impurity levels than the densified silica particles produced by the process of the present invention. These higher impurity levels are due in part to the fact that impurities, including trace amounts of radioactive materials, are introduced into the silica during the fuming process.

The higher impurity levels also arise from the fact that densification of particles made from fumed silica gels requires higher temperatures than densification of particles formed from gels prepared in accordance with the present invention, i.e., densification of particles made from fumed silica gels require temperatures above, rather than below, 1150 °C. Such higher temperatures generally mean that metal-containing furnaces must be used to perform the densification. The use of such furnaces, in turn, means that the silica particles will be exposed to and thus will pick up metal ions which are released from the walls of the hot furnace. In addition to the purity problem, the need to generate higher temperatures to achieve densification is in general undesirable.

The use of hot isostatic pressing ("hipping"), as well as other pressing techniques, to compress gas bubbles in vitreous materials has been described in a number of references. See Rhodes, U.S. Pat. No. 3,310,392, Bush, U.S. Pat. No. 3,562,371, Okamoto et al., U.S. Pat. No. 4,358,306, and Bruning et al., U.S. Pat. No. 4,414,014 and UK patent application No. 2,086,369. The Bush patent, in particular, discloses forming a green body, sintering the body in a vacuum, and then subjecting the consolidated body to isostatic pressure at a temperature equal to or greater than the sintering temperature.

In view of the foregoing state of the art, it is an object of the present invention to provide an improved process for producing optical quality, high purity, glass articles. In particular, it is an object of the invention to provide a process for producing such articles which involves the sintering of a porous silica body but avoids the cracking, shrinkage and purity problems encountered in prior art processes of this type.

With regard to products, it is an object of the invention to provide ultra-pure silica granules which can be used in a variety of conventional ceramic forming processes, such as, powder pressing, extrusion, slip casting, and the like, to produce green bodies. It is an additional object of the invention to produce glass articles of complex shapes which have higher purities, more uniform transmittance characteristics, and smaller index of refraction variations, i.e., better homogeneity, than similar articles produced by prior art techniques. It is a further object of the invention to economically produce optical waveguide fibers which have transmission characteristics equivalent to optical waveguide fibers produced by more expensive techniques.

Subject of the invention is a method for producing a fused glass article comprising the steps of:

a) compacting metal oxide or metalloid oxide into granules having a mean particle size less than about 1 millimeter;

b) optionally sintering the granules at a temperature less than about 1.100°C, the density of the granules after sintering being approximately equal to their maximum theoretical density;

c) forming a green body from the granules or mixture or mixture of the granules, according to step a) and/or b) using uniaxial, cold isostatic and hot isostatic powder pressing, slip casting, extrusion, moulding and injection moulding;

d) optionally drying and partially sintering the green body in a chamber by:

I) raising the temperature of the chamber optionally to above about 1.000 °C, e.g., to 1.150 °C, and optionally introducing chlorine gas into the chamber and/or purging the chamber with an inert gas and/or subjecting the chamber to a vacuum;

e) optionally fully sintering the green body in a chamber within a temperature range from about 1.200 °C to a temperature above about 1.720 °C while optionally purging the chamber with helium or preferably applying a vacuum to the chamber and

f) optionally hot isostatic pressing the fully sintered green body in a chamber by raising the temperature of the chamber to above about 1150 °C and introducing an inert gas into the chamber at a pressure above about 100 psig (= 6,895 bar), preferably above 1,000 psig (= 68,95 bar) and more preferably above about 15,000 psig (= 1.034,25 bar).

Particular process steps can also be omitted depending on the specific conditions used and the purity requirements of the final product. For example, chlorine treatment may not be required in step (d) if the finished product does not have to have a low water content. Other modifications of this type are discussed below in connection with the description of the preferred embodiments of the invention.

Unlike prior art techniques which have employed sol-gel technology, the foregoing method provides a practical procedure for commercially producing ultra high purity, optical quality glass articles. The success of this technique is due to a number of factors. In the first place, the technique of the present invention does not use sol-gel technology to form a green body.

In addition to using metal oxide or metalloid oxide granules, the method of the invention also carries the high purity level of the granules through to the final product and, at the same time, produces a finished product having excellent optical properties. In particular, the oxygen and chlorine treatments during the drying of the green body specifically reduce the level of water in the finished product. In addition, the use of the preferred vacuum sintering means that any bubbles or similar defects which are created during sintering will in essence be empty voids. These empty spaces can be easily closed during hipping.

In a preferred subject of the invention the compacting of the metal oxides or metalloid oxides can be prepared by dispersing the metal oxides or metalloid oxides in water, spray drying it and heating the granules obtained at a temperature of from 150 to 1.100 °C for a period of 1 to 8 h.

In preferred subject of the invention the metaloxide or metalloidoxide can be silica granules i.e.:

a) pyrogenically produced silicon dioxide, which has been compacted to granules having
a tamped density of from 150 g/l to 800 g/l,
a granule particle size of from 10 to 800 $\mu$m and
a BET surface area of from 10 to 500 $m^2$/g, or

b) pyrogenically produced silicon dioxide, which has been compacted to granules, having the following physico-chemical data:

mean particle diameter: from 25 to 120 $\mu$m,
BET surface area: from 40 to 400 $m^2$/g,
pore volume: from 0.5 to 2.5 ml/g,
pore distribution: no pores with a diameter < 5 nm, only meso- and macro-pores are present,
pH value: from 3.6 to 8.5,
tamped density: from 220 to 700 g/l.

The compacting step can be made according to US Patent No. 5,776,240.

In a preferred embodiment of the invention, a pyrogenically produced silicon dioxide, which has been granulated or compacted in a known manner according to US Patent No. 5,776,240 can be used in the production of sintered materials.

The silicon dioxide so compacted or granulated can be a pyrogenically produced oxide having a BET surface area of from 10 to 500 $m^2/g$, a tamped density of from 150 to 800 g/l and a granule particle size of from 10 to 800 $\mu$m.

According to the invention, mixtures of compacted and uncompacted silicon dioxide can also be used.

Hereinbelow, the expressions "pyrogenically produced silica", "pyrogenically produced silicon dioxide", "pyrogenic silica" and "pyrogenic silicon dioxide" are to be understood as meaning very finely divided, nanoscale powders produced by converting gaseous silicon chloride, such as, for example, methyltrichlorosilane or silicon tetrachloride in a high temperature flame, wherein the flame is fed with hydrogen and oxygen and water vapor can optionally be supplied thereto.

Hereinbelow, the term "granule" is to be understood as meaning pyrogenically produced silicon dioxide powders highly compacted by means of the compaction process described in US Patent No. 5,776,240 or analogously to that process.

   c) For the method according to the invention, either pyrogenically produced silicon dioxide, which has been compacted to granules by means of a downstream compacting step according to DE 196 01 415 A1 is used, which corresponds to US Patent 5,776,240, having a tamped density of from 150 g/l to 800 g/l, preferably from 200 to 500 g/l, a granule particle size of from 10 to 800 $\mu$m and a BET surface area of from 10 to 500 $m^2/g$, preferably 20 to 130 $m^2/g$, or granules according to US Patent No. 5,776,240, based on pyrogenically produced silicon dioxide are used, having the following physico-chemical data:

   mean particle diameter from 25 to 120 $\mu$m;
   BET surface area from 40 to 400 $m^2/g$
   pore volume from 0.5 to 2.5 ml/g
   pore distribution: no pores with a diameter < 5 nm, only meso- and macro-pores are present,
   pH value: from 3.6 to 8.5,
   tamped density: from 220 to 700 g/l.

In the example according to the invention the following presintering compositions can be used:

   a) A pyrogenically produced silicon dioxide having a BET surface area of 90 $m^2/g$ and a bulk density of 35 g/l and a tamped density of 59 g/l is compacted to a granule according to US Patent No. 5,776,240. The compacted silicon dioxide has a BET surface area of 90 $m^2/g$ and a tamped density of 246 g/l.

   b) A pyrogenically produced silicon dioxide having a BET surface area of 50 $m^2/g$ and a tamped density of 130 g/l is compacted to a granule according to US Patent No. 5,776,240.
   The compacted silicon dioxide has a BET surface area of 50 $m^2/g$ and a tamped density of 365 g/l.

   c) A pyrogenically produced silicon dioxide having a BET surface area of 300 $m^2/g$ and a bulk density of 30 g/l and a tamped density of 50 g/l is compacted according to US Patent No. 5,776,240.
   The compacted silicon dioxide has a BET surface area of 300 $m^2/g$ and a tamped density of 289 g/l.

   d) A pyrogenically produced silicon dioxide having a BET surface area of 200 $m^2/g$ and a bulk density of 35 g/l and a tamped density of 50 g/l is compacted according to US Patent No. 5,776,240.
    The compacted silicon dioxide has a BET surface area of 200 $m^2/g$ and a tamped density of 219 g/l.

The chief process for the preparation of pyrogenic silicon dioxide, starting from silicon tetrachloride which is reacted in mixture with hydrogen and oxygen, is known from Ullmanns Enzyklopädie der technischen Chemie, 4th edition, Vol. 21, pp. 464 et seq. (1982).

The metal oxide or metalloid oxide to be used according to the invention can be granules based on pyrogenically produced silicon dioxide powder with

- a BET surface area of 30 to 90 $m^2/g$,
- a DBP index of 80 or less
- a mean aggregate area of less than 25000 $nm^2$,
- a mean aggregate circumference of less than 1000 nm, wherein at least 70% of the aggregates have a circumference of less than 1300 nm. This pyrogenically produced silicon dioxide is disclosed in WO 2004/054929.

The BET surface area may preferably be between 35 and 75 m2/g. Particularly preferably the values may be between 40 and 60 m2/g. The BET surface area is determined in accordance with DIN 66131.

The DBP index may preferably be between 60 and 80. During DBP absorption, the take-up of force, or the torque (in Nm), of the rotating blades in the DBP measuring equipment is measured while defined amounts of DBP are added, comparable to a titration. A sharply defined maximum, followed by a drop, at a specific added amount of DBP is then produced for the powder according to the invention.

A silicon dioxide powder with a BET surface area of 40 to 60 $m^2$/g and a DBP index of 60 to 80 may be particularly preferred.

Furthermore, the silicon dioxide powder to be used according to the invention may preferably have a mean aggregate area of at most 20000 $nm^2$. Particularly preferably, the mean aggregate area may be between 15000 and 20000 $nm^2$. The aggregate area can be determined, for example, by image analysis of TEM images. An aggregate is understood to consist of primary particles of similar structure and size which have intergrown with each other, the surface area of which is less than the sum of the individual isolated primary particles. Primary particles are understood to be the particles which are initially formed in the reaction and which can grow together to form aggregates as the reaction proceeds further.

A silicon dioxide powder with a BET surface area of 40 to 60 $m^2$/g, a DBP index of 60 to 80 and a mean aggregate area between 15000 and 20000 $nm^2$ may be particularly preferred.

In a preferred embodiment, the silicon dioxide powder to be used according to the invention may have a mean aggregate circumference of less than 1000 nm. Particularly preferably, the mean aggregate circumference may be between 600 and 1000 nm. The aggregate circumference can also be determined by image analysis of TEM images.

A silicon dioxide powder with a BET surface area of 40 to 60 $m^2$/g, a DBP index of 60 to 80, a mean aggregate area between 15000 and 20000 $nm^2$ and a mean aggregate circumference between 600 and 1000 nm may be particularly preferred.

Furthermore, it may be preferable for at least 80%, particularly preferably at least 90%, of the aggregates to have a circumference of less than 1300 nm.

In a preferred embodiment, the silicon dioxide powder to be used according to the invention may assume a degree of filling in an aqueous dispersion of up to 90 wt.%. The range between 60 and 80 wt.% may be particularly preferred.

Determination of the maximum degree of filling in an aqueous dispersion is performed by the incorporation of powder, in portions, into water using a dissolver, without the addition of other additives. The maximum degree of filling is achieved when either no further powder is taken up into the dispersion, despite elevated stirring power, i.e. the powder remains in dry form on the surface of the dispersion, or the dispersion becomes solid or the dispersion starts to form lumps.

Furthermore, the silicon dioxide powder to be used according to the invention may have a viscosity at a temperature of 23°C, with respect to a 30 wt.% aqueous dispersion at a rate of shear of 5 rpm, of less than 100 mPas. In particularly preferred embodiments, the viscosity may be less than 50 mPas.

The pH of the silicon dioxide powder to be used according to the invention may be between 3.8 and 5, measured in a 4% aqueous dispersion.

The process for preparing the silicon dioxide powder to be used according to the invention, is characterised in that at least one silicon compound in the vapour form, a free-oxygen-containing gas and a combustible gas are mixed in a burner of known construction, this gas mixture is ignited at the mouth of the burner and is burnt in the flame tube of the burner, the solid obtained is separated from the gas mixture and optionally purified, wherein

- the oxygen content of the free-oxygen-containing gas is adjusted so that the lambda value is greater than or equal to 1,

- the gamma-value is between 1.2 and 1.8,

- the throughput is between 0.1 and 0.3 kg $SiO_2$/$m^3$ of core gas mixture,

- the mean normalised rate of flow of gas in the flame tube at the level of the mouth of the burner is at least 5 m/s.

The oxygen content of the free-oxygen-containing gas may correspond to that of air. That is, in this case air is used as a free-oxygen-containing gas. The oxygen content may, however also take on higher values. In a preferred manner, air enriched with oxygen should have an oxygen content of not more than 40 vol.%.

Lambda describes the ratio of oxygen supplied in the core to the stoichiometrically required amount of oxygen. In a preferred embodiment, lambda lies within the range 1 < lambda ≤ 1.2.

Gamma describes the ratio of hydrogen supplied in the core to the stoichiometrically required amount of hydrogen. In a preferred embodiment, gamma lies within the range 1.6 < gamma ≤ 1.8.

The normalised rate of flow of gas refers to the rate of flow at 273 K and 1 atm.

A burner of known construction is understood to be a burner with concentric tubes. The core gases are passed through the inner tube, the core. At the end of the tube, the mouth of the burner, the gases are ignited. The inner tube is surrounded by at least one other tube, the sleeve. The reaction chamber, called the flame tube, starts at the level of the mouth of the burner. This is generally a conical tube, cooled with water, which may optionally be supplied with other gases (sleeve gases) such as hydrogen or air.

The mean, normalised rate of flow of the gas in the flame tube at the level of the mouth of the burner of at least 5 m/s refers to the rate of flow immediately after the reaction mixture leaves the burner. The rate of flow is determined by means of the volume flow of the reaction products in vapour form and the geometry of the flame tube.

The core gases are understood to be the gases and vapours supplied to the burner, that is the free-oxygen-containing gas, generally air or air enriched with oxygen, the combustible gas, generally hydrogen, methane or natural gas, and the silicon compound or compounds in vapour form.

An essential feature of the process is that the mean normalised rate of flow of gas in the flame tube at the level of the mouth of the burner is at least 5 m/s. In a preferred embodiment, the mean normalised rate of flow of the gas in the flame tube at the level of the mouth of the burner assumes values of more than 8 m/s.

The mean rate of discharge of the gas mixture (feedstocks) at the mouth of the burner is not limited. However, it has proven to be advantageous when the rate of discharge at the mouth of the burner is at least 30 m/s.

In a preferred embodiment, additional air (secondary air) may be introduced into the reaction chamber, wherein the rate of flow in the reaction chamber may be raised further.

In a preferred embodiment, the mean normalised rate of flow of gas in the flame tube at the level of the mouth of the burner may be 8 to 12 m/s.

The type of silicon compound used in the process is not further restricted. Silicon tetrachloride and/or at least one organochlorosilicon compound may preferably be used.

A particularly preferred embodiment of the process is one in which

- silicon tetrachloride is used,

- the lambda value is such that 1 < lambda ≤ 1.2,

- the gamma-value is between 1.6 and 1.8,

- the throughput is between 0.1 and 0.3 kg $SiO_2/m^3$ of core gas mixture,

- in addition at least double the amount of air, with respect to the amount of free-oxygen-containing gas introduced into the burner, is introduced into the flame tube and

- the rate of flow of the gas of feedstocks at the mouth of the burner is 40 to 65 m/s (with respect to standard conditions)

- and the mean normalised rate of flow of gas in the flame tube at the level of the mouth of the burner is between 8 and 12 m/s.

In general during the preparation of pyrogenic oxides, the rate of flow of gas in the water-cooled reaction chamber (flame tube) and in the subsequent cooling unit (cooling stretch) is adjusted in such a way that the best possible cooling power, that is to say rapid cooling of the reaction products, is ensured. In principle, it is true that the cooling power increases with decreasing rate of flow of gas. The lower limit is simply based on the requirement of still being able to transport the product through the pipes with the gas stream.

It was demonstrated that although a considerable increase in the rate of flow of gas in the reaction chamber resulted in a reduced cooling power, it led to a powder with unexpected properties. Whereas physical characteristics such as BET surface area and DBP absorption are substantially unchanged as compared with powders according to the prior art, the powder exhibits a much lower structure.

Furtheron the metal oxide or metalloid oxide to be used according to the invention can be granules based on pyrogenically produced silicon dioxide which is characterised by a metals content of less than 9 ppm.

In a preferred embodiment the high-purity pyrogenically prepared silicon dioxide to be used according to the invention, can be characterised by the following metal contents:

Li     ppb    < = 10

(continued)

| | | |
|---|---|---|
| Na | ppb | < = 80 |
| K | ppb | < = 80 |
| Mg | ppb | < = 20 |
| Ca | ppb | < = 300 |
| Fe | ppb | < = 800 |
| Cu | ppb | < = 10 |
| Ni | ppb | < = 800 |
| Cr | ppb | < = 250 |
| Mn | ppb | < = 20 |
| Ti | ppb | < = 200 |
| Al | ppb | < = 600 |
| Zr | ppb | < = 80 |
| V | ppb | < = 5 |

The total metal content can then be 3252 ppb (- 3.2 ppm) or less.

In an embodiment of the invention, which is further preferred, the high-purity pyrogenically prepared silicon dioxide can be characterised by the following metal contents:

| | | |
|---|---|---|
| Li | ppb | < = 1 |
| Na | ppb | < = 50 |
| K | ppb | < = 50 |
| Mg | ppb | < = 10 |
| Ca | ppb | < = 90 |
| Fe | ppb | < = 200 |
| Cu | ppb | < = 3 |
| Ni | ppb | < = 80 |
| Cr | ppb | < = 40 |
| Mn | ppb | < = 5 |
| Ti | ppb | < = 150 |
| Al | ppb | < = 350 |
| Zr | ppb | < = 3 |
| V | ppb | < = 1 |

The total metal content can then be 1033 ppb (- 1.03 ppm) or less.

The process for the preparation of the high-purity pyrogenically prepared silicon dioxide is characterised in that silicon tetrachloride is in known manner reacted in a flame by means of high-temperature hydrolysis to give silicon dioxide, and a silicon tetrachloride is used here which has a metal content of less than 30 ppb.

In a preferred embodiment of the invention a silicon tetrachloride can be used which has the following metal contents in addition to silicon tetrachloride:

| | | |
|---|---|---|
| Al | less than 1 | ppb |
| B | less than 3 | ppb |
| Ca | less than 5 | ppb |
| Co | less than 0.1 | ppb |
| Cr | less than 0.2 | ppb |
| Cu | less than 0.1 | ppb |
| Fe | less than 0.5 | ppb |
| K | less than 1 | ppb |
| Mg | less than 1 | ppb |
| Mn | less than 0.1 | ppb |
| Mo | less than 0.2 | ppb |

(continued)

| | | |
|---|---|---|
| Na | less than 1 | ppb |
| Ni | less than 0.2 | ppb |
| Ti | less than 0.5 | ppb |
| Zn | less than 1 | ppb |
| Zr | less than 0.5 | ppb |

Silicon tetrachloride having this low metal content can be prepared according to DE 100 30 251 or according to DE 100 30 252.

The metal content of the silicon dioxide according to the invention is within the ppm range and below (ppb range).

It has been found that by means of the invention, finished products of complex shapes, such as, optical domes, antenna windows, sight glasses, aerospace viewports, lenses, prisms, mirrors, etc., can be readily produced which have equivalent or better optical properties than similar products produced by other techniques. In particular, the products have been found to have higher purities, smaller index of refraction variations (better homogeneities), and more uniform transmittance characteristics from the ultraviolet through the infrared than similar commercial products which have heretofore been available. The method of the invention can be used to produce low loss, optical waveguide fibers. Significantly, in accordance with the invention, production costs for such fibers can be reduced.

The optional sintering of the granules is conducted at a temperature of less than about 1.100°C. This low sintering temperature allows the sintering to be conducted in the quartz reactor. The use of such reactor, as opposed to a metal furnace, helps maintain the purity of the granules through the sintering procedure.

The sintering can be performed in a variety of atmospheres. For example, helium, helium/oxygen, and argon/oxygen atmospheres can be used. In some cases, a helium atmosphere has been found preferable to an argon/oxygen atmosphere. The sintering can also be performed in air.

The granules can be used as a filler for potting sensitive electronic components, such as, semiconductor memory devices. In comparison with prior art silica fillers, the granules contain lower amounts of such radioactive materials as uranium and thorium, and thus produce less alpha particles which can interfere with the operation of state-of-the-art electronic components.

In accordance with the present invention, the granules are used to form high density green bodies. In particular, the granules are used as the starting material for such conventional processes as slip casting, injection molding, extrusion molding, cold isopressing, and the like. A description of these and other processes in which the granules of the present invention can be used can be found in such texts as Introduction to Ceramics, by W. D. Kingery, John Wiley and Sons, Inc., New York, 1960, and Ceramic Processing Before Firing, G. Y. Onoda, Jr., and L. L. Hench, editors, John Wiley and Sons, Inc., New York, 1978, the pertinent portions of which are incorporated herein by reference.

With regard to slip casting in particular, descriptions of this technique can be found in U.S. Pat. No. 2,942,991 and in Whiteway, et al., "Slip Casting Magnesia," Ceramic Bulletin, 40: 432-435 (1961), the pertinent portions of which are also incorporated herein by reference.

Such a slurry can be conveniently produced using a urethane-lined vibra-mill to which the granules, silica media, and water are added. Using a slurry of this type, high density green bodies, e.g., green bodies having a porosity on the order of 20%, are readily prepared.

For various of the other casting methods, e.g, the injection, extrusion, and pressing techniques, it is generally preferred to employ a binder in the slurry. Such a binder can be conveniently formed by in situ hydrolyzation of TEOS. By way of illustration, a slurry of the granules of the present invention was successfully cast in a plastic mold, as opposed to a plaster of Paris mold, by adding 5 milliliters of an acid-catalyzed TEOS/water mixture (4 moles water to each mole of TEOS) to 132 milliliters of slurry. After molding, 2-7 milliliters of a basic solution (1.2% ammonium carbonate) was added to the slurry. The basic solution shifted the pH causing the TEOS to gel within a period of from about 2 to about 30 minutes, thus binding the granules together to form a strong green body, well-suited for further processing. Alternatively, commercial binders, such as those sold by the Stauffer Chemical Company under the SILBOND trademark, can be used.

Once formed, the green body can be purified purified and consolidated by a two-step process. In the first step, the green body is dried and partially sintered. In the second step, the green body is fully sintered.

The drying and partial sintering step, among other things, serves to remove water from the green body which could form bubbles in the final product during full sintering. To minimize contamination, this step is preferably performed in a quartz tube furnace, although other types of furnaces can be used, if desired. When a quartz tube furnace is used, the temperatures employed are preferably kept below about 1150 °C.

Drying and partial sintering are achieved by raising the temperature of the furnace to above about 1000 °C, while introducing chlorine into the furnace and/or applying a vacuum to the furnace and/or purging the furnace with one or more inert gases, e.g., with argon and/or helium. The chlorine treatment, vacuum stripping and/or inert gas purging reduces the chances that the water content of the green body will cause bubbles to form during full sintering. In addition to removing water, the chlorine treatment has also been found to reduce the green body's iron, copper, and calcium levels. When the green body is formed by slip casting, the chlorine treatment's ability to strip calcium is of particular value since the green body tends to pick up calcium from the plaster of Paris mold.

Optionally, the drying and partial sintering step can include subjecting the green body to an oxygen-containing atmosphere to reduce its content of organic materials.

The oxygen treatment can be omitted if the green body includes only minor levels of organic material contamination. The chlorine treatment can be omitted in cases where the final product can have a relatively high water content, e.g., in cases where the absorption characteristics of the final product in the infrared region are not critical. When the chlorine treatment is omitted, either vacuum stripping or inert gas purging should be performed. If desired, both vacuum stripping and gas purging can be used sequentially. Either or both the vacuum stripping and the inert purging can be omitted when the chlorine treatment is used.

After the green body has been dried and optionally partial sintered, it is fully sintered at a temperature range, from about 1.200 °C to above about 1.720 °C. Full sintering is preferably performed in a vacuum of, for example, $1 \times 10^{-5}$ torr. Alternatively, helium purging can be used, although this is less preferred since any bubbles which form in the glass during sintering will be filled with helium, rather than being empty, as occurs during vacuum sintering.

The full sintering of the cast granules can be performed in, for example, a tungsten-molybdenum furnace or a heliumfilled graphite furnace. To minimize contamination, the green body is preferably supported on quartz cloth and monoclinic unstabilized zirconia A grain.

In general, full sintering, as well as cooling of the sintered product, can be completed in about 3 hours. Thereafter, if desired, the surfaces of the consolidated green body can be cleaned with hydrofluoric acid. Also, areas of the green body which may have become deformed during sintering, e.g., areas in contact with the quartz cloth, can be removed by grinding.

For certain applications, e.g., the production of consolidated preforms for optical waveguide fibers, the fully sintered green body may be ready for use without further processing. In most cases, however, it is preferred to hip the sintered green body to collapse any bubbles which may have formed in the body during the sintering process.

The hipping is performed in the pressure chamber of a hipping furnace (see, for example, U.S. Pat. No. 4,349,333) by heating the chamber to a temperature greater that the annealing point of the consolidated green body and less than about 1800 °C, while introducing an inert gas, such as, argon, helium, or nitrogen, into the chamber at a pressure in the range of 100-45,000 psi (6,895 to 3.102,75 bar). In practice, temperatures in the range of 1150-1740 °C and pressures in the range of 1,000-30,000 psig (68,95 to 2.068,5 bar) have been found suitable for collapsing bubbles and other voids in consolidated green bodies produced in accordance with the present invention. Lower pressures, e.g., pressures in the 100-1000 psig (6,895 to 68,95 bar) range, can also be used.

To avoid contamination of the consolidated green body during hipping, it is preferred to wrap the body in glass wool and steel foil before it is placed in the hipping furnace. These precautions, however, can be omitted in the case of a "clean" furnace which has only been used to hip high purity silica materials.

After hipping has been completed, various conventional glass treatment procedures, such as, annealing, grinding, polishing, drawing, pressing, etc., can be applied to the fully sintered and hipped green body. The resulting finished product is then ready for use by the consumer.

**Examples**

The BET surface area is determined in accordance with DIN 66131.

The dibutyl phthalate absorption is measured with a RHEOCORD 90 instrument made by Haake, Karlsruhe. For this purpose, 16 g of the silicon dioxide powder, weighed out to an accuracy of 0.001 g, is placed in a mixing chamber, this is sealed with a lid and dibutyl phthalate is added at a pre-set rate of addition of 0.0667 ml/s via a hole in the lid. The mixer is operated with a motor speed of 125 revs per minute. After reaching maximum torque, the mixer and DBP addition are automatically switched off. The DBP absorption is calculated from the amount of DBP consumed and the amount of particles weighed out in accordance with:

DBP index (g/100 g) = (DBP consumed in g / initial weight of particles in g) x 100.

A programmable rheometer for testing complex flow behaviour, equipped with a standard rotation spindle, was available for determining the viscosity.

Rate of shear: 5 to 100 rpm

Temperature of measurement: room temperature (23°C) Concentration of dispersion: 30 wt.%

Procedure: 500 ml of dispersion are placed in a 600 ml glass beaker and tested at room temperature (statistical recording of temperature via a measuring sensor) under different rates of shear.

Determination of the compacted bulk density is based on DIN ISO 787/XI K 5101/18 (not sieved).

Determination of the pH is based on DIN ISO 787/IX, ASTM D 1280, JIS K 5101/24.

The image analyses were performed using a TEM instrument H 7500 made by Hitachi and a CCD camera MegaView II, made by SIS. Image magnification for evaluation purposes was 30000 : 1 at a pixel density of 3.2 nm. The number of particles evaluated was greater than 1000. Preparation was in accordance with ASTM 3849-89. The lower threshold limit for detection was 50 pixels.

Determining the maximum degree of filling in an aqueous dispersion: 200 g of fully deionised water were initially placed in a 1 l vessel (diameter about 11 cm). A dissolver from VMA-Getzmann, model Dispermat® CA-40-C with a dissolver disc, diameter about 65 mm, was used as the dispersing unit.

At the start, the dissolver is operated at about 650 rpm. The powder is added in portions of about 5 g. After each addition, there is a waiting period until the powder has been completely incorporated into the suspension. Then the next portion is added. As soon as incorporation of an added amount of powder takes longer than about 10 s, the speed of the dissolver disc is increased to 1100 rpm. Then further stepwise addition is performed. As soon as incorporation of an added amount of powder takes longer than about 10 s, the speed of the dissolver disc is increased to 1700 rpm.

The maximum degree of filling is achieved when either no further powder is taken up by the dispersion, despite increased stirring power, i.e. the powder remains in dry form on the surface of the dispersion, or the dispersion becomes solid or the dispersion starts to form lumps.

The amount of powder added can be determined by difference weighing (preferably difference weighing of the powder stock). The maximum degree of filling is calculated as:

```
Maximum degree of filling = amount of powder added
[g]/(amount of powder added [g] + amount of water initially
introduced [g]) x 100%
```

**Example 1 (comparison example):**

500 kg/h $SiCl_4$ are vaporised at about 90°C and transferred to the central tube of a burner of known construction. 145 $Nm^3$/h of hydrogen and 207 $Nm^3$/h of air with an oxygen content of 35 vol.% are also introduced into this tube. This gas mixture is ignited and burnt in the flame tube of the water-cooled burner. The mean normalised rate of flow of gas in the flame tube at the level of the mouth of the burner is 0.7 m/s. After cooling the reaction gases, the pyrogenic silicon dioxide powder is separated from the hydrochloric acid-containing gases using a filter and/or a cyclone. The pyrogenic silicon dioxide powder is treated with water vapour and air in a deacidification unit.

**Examples 2 to 4 (comparison examples)** are performed in the same way as example 1. The parameters which are altered each time are given in Table 1.

**Example 5 (working example):**

400 kg/h $SiCl_4$ are vaporised at about 90°C and transferred to the central tube of a burner of known construction. 195 $Nm^3$/h of hydrogen and 303 $Nm^3$/h of air with an oxygen content of 30 vol.% are also introduced into this tube. This gas mixture is ignited and burnt in the flame tube of the water-cooled burner. The mean normalised rate of flow of gas in the flame tube at the level of the mouth of the burner is 10 m/s. After cooling the reaction gases, the pyrogenic silicon dioxide powder is separated from the hydrochloric acid-containing gases using a filter and/or a cyclone. The pyrogenic silicon dioxide powder is treated with water vapour and air in a deacidification unit.

Examples 6 to 8 are performed in the same way as described in example 1. The parameters which are altered each time are given in Table 1.

The analytical data for powders 1 to 8 are given in Table 2.

The powders in examples 5 to 8 exhibit much lower values for mean aggregate area, mean aggregate circumference and maximum and minimum aggregate diameter and thus much less structure than the powders in comparison examples 1 to 4.

The powders have a much higher maximum degree of filling and a much lower viscosity in an aqueous dispersion.

**Table 1: Experimental conditions and the flame parameters calculated therefrom**

|  |  | Comparison examples | | | | Examples acc. to the invention | | | |
|---|---|---|---|---|---|---|---|---|---|
| Example |  | 1 | 2 | 3 | 4 | 5 | 6 | 7 | 8 |
| $SiCl_4$ | kg/h | 500 | 500 | 400 | 400 | 400 | 400 | 350 | 400 |
| $H_2$ core | $Nm^3$/h | 145 | 210 | 255 | 190 | 195 | 195 | 145 | 195 |
| Air (primary air) | $Nm^3$/h | 207 | 300 | 250 | 320 | 303 | 300 | 220 | 300 |
| $O_2$ content of air | Vol.% | 35 | 35 | 35 | 30 | 35 | 29.5 | 35 | 33 |
| Secondary air (b) | $Nm^3$/h | - | 50 | 250 | 50 | 730 | 600 | 500 | 100 |
| Burner diameter | mm | 55 | 65 | 65 | 65 | 64 | 64 | 64 | 64 |
| Flame tube diameter | mm | 450 | 450 | 450 | 450 | 208 | 208 | 160 | 160 |
| lambda [c] |  | 1.0 | 1.0 | 0.69 | 1.0 | 1.1 | 1.0 | 1.1 | 1.0 |
| gamma |  | 1.1 | 1.6 | 2.4 | 1.8 | 1.8 | 1.8 | 1.6 | 1.8 |
| VB [d] | m/s | 49 | 48 | 47 | 47 | 47 | 47 | 36 | 47 |
| $V_F$ [e] | m/s | 0.7 | 1 | 1.28 | 1 | 10 | 9 | 12 | 8 |
| Throughput [a] | $kg/m^3$ | 0.42 | 0.31 | 0.25 | 0.25 | 0.26 | 0.26 | 0.3 | 0.26 |
| (a) kg $SiO_2/m^3$ of primary air + hydrogen + $SiCl_4$ (feedstocks);<br>(b) air with 21 vol.% $O_2$;<br>(c) with reference to primary air;<br>(d) $V_B$ = mean rate of discharge at the mouth of the burner (normalised);<br>(e) $V_F$ = mean rate of flow in the reaction chamber at the level of the mouth of the burner (normalised). | | | | | | | | | |

**Table 2: Analytical data for silicon dioxide powders**

|  |  | Comparison examples | | | | Examples to be used to the invention | | | |
|---|---|---|---|---|---|---|---|---|---|
| Example |  | 1 | 2 | 3 | 4 | 5 | 6 | 7 | 8 |
| BET | $m^2$/g | 44 | 55 | 49 | 60 | 45 | 44 | 60 | 55 |
| DBP | g/100g | 106 | 121 | 142 | 90 | 67 | 72 | 61 | 65 |
| Mean aggregate area | $nm^2$ | 23217 | 22039 | 24896 | 22317 | 17063 | 15972 | 16816 | 18112 |
| Mean aggregate circumference | nm | 1032 | 1132 | 1201 | 1156 | 742 | 658 | 704 | 699 |
| Aggregates < 1300 nm | % | 61 | 64 | 52 | 64 | 80 | 84 | 89 | 82 |
| Max. aggregate diameter | nm | 292 | (b) | (b) | (b) | 191 | 183 | (b) | (b) |
| Min. aggregate diameter | nm | 207 | (b) | (b) | (b) | 123 | 117 | (b) | (b) |
| Compacted bulk density | g/l | 112 | 90 | 89 | 117 | 117 | 105 | 110 | 123 |
| Viscosity (a) | mPas | 420 | 600 | 1200 | 380 | 20 | 33 | 48 | 18 |
| Maximum degree of filling | wt.% | 34 | 25 | 26 | 33 | 72 | 81 | 79 | 81 |
| pH |  | 4.5 | 4.8 | 4.7 | 4.6 | 4.7 | 4.8 | 4.5 | 4.8 |
| (a) 30 wt.% dispersion at 5 rpm; | | | | | | | | | |

(continued)

| (b) not determined |
|---|

**Example 9 (Comparison Example)**

500 kg/h $SiCl_4$ having a composition in accordance with Table 3 are evaporated at approx. 90°C and transferred into the central tube of a burner of known design. 190 $Nm^3$/h hydrogen as well as 326 $Nm^3$/h air having a 35 vol.% oxygen content are introduced additionally into this tube. This gas mixture is ignited and burns in the flame tube of the water-cooled burner. 15 $Nm^3$/h hydrogen are introduced additionally into a jacket nozzle surrounding the central nozzle, in order to prevent baking-on. 250 $Nm^3$/h air of normal composition are moreover introduced additionally into the flame tube. After cooling of the reaction gases the pyrogenic silicon dioxide powder is separated by means of a filter and/or a cyclone from the hydrochloric acid-containing gases. The pyrogenic silicon dioxide powder is treated with water vapour and air in a deacidifying unit in order to remove adherent hydrochloric acid. The metal contents are reproduced in Table 5.

**Example 10 (Embodiment Example)**

500 kg/h $SiCl_4$ having a composition in accordance with Table 4 are evaporated at approx. 90°C and transferred into the central tube of a burner of known design. 190 $Nm^3$/h hydrogen as well as 326 $Nm^3$/h air having a 35 vol.% oxygen content are introduced additionally into this tube. This gas mixture is ignited and burns in the flame tube of the water-cooled burner. 15 $Nm^3$/h hydrogen are introduced additionally into a jacket nozzle surrounding the central nozzle, in order to prevent baking-on. 250 $Nm^3$/h air of normal composition are moreover introduced additionally into the flame tube. After cooling of the reaction gases the pyrogenic silicon dioxide powder is separated by means of a filter and/or a cyclone from the hydrochloric acid-containing gases. The pyrogenic silicon dioxide powder is treated with water vapour and air in a deacidifying unit in order to remove adhering hydrochloric acid.
The metal contents are reproduced in Table 5.

Table 3: Composition of $SiCl_4$, Example 9

| Al | B | Ca | Co | Cr | Cu | Fe | K | Mg | Mn | Mo | Na | Ni | Ti | Zn | Zr |
|---|---|---|---|---|---|---|---|---|---|---|---|---|---|---|---|
| ppb | ppb | ppb | ppb | ppb | ppb | ppb | ppb | ppb | ppb | ppb | ppb | ppb | ppb | ppb | ppb |
| 18 | 140 | 86 | <0.1 | 2.7 | 0.4 | 280 | 14 | - | 1.4 | - | 200 | 0.6 | 250 | | |

Table 4: Composition of $SiCl_4$, Example 10

| Al | B | Ca | Co | Cr | Cu | Fe | K | Mg | Mn | Mo | Na | Ni | Ti | Zn | Zr |
|----|----|----|----|----|----|----|----|----|----|----|----|----|----|----|----|
| ppb | ppb | ppb | ppb | ppb | ppb | ppb | ppb | ppb | ppb | ppb | ppb | ppb | ppb | ppb | ppb |
| <1 | <30 | <5 | <0.1 | <0.2 | <0.1 | <0.5 | <1 | <1 | <0.1 | <0.2 | <1 | <0.2 | <0.5 | <1 | <0.5 |

EP 1 700 828 A1

Table 5: Metal contents of silicon dioxides (ppb)

| [ppb] | Example 10a | | Example 10b | | Example 9 |
|---|---|---|---|---|---|
| | | | | | Comparison Example Aerosil® OX50 |
| Li | 0.8 | < = 10 | 0.5 | < = 1 | < 100 |
| Na | 68 | < = 80 | 49 | < = 50 | < 1000 |
| K | 44 | < = 80 | 46 | < = 50 | 10 |
| Mg | 10 | < = 20 | 10 | < = 10 | < 200 |
| Ca | 165 | < = 300 | 89 | < = 90 | 190 |
| Fe | 147 | < = 800 | 192 | < = 200 | < 100 |
| Cu | 3 | < = 10 | < 3 | < = 3 | < 100 |
| Ni | 113 | < = 800 | 79 | < = 80 | < 200 |
| Cr | 47 | < = 250 | 37 | < = 40 | < 100 |
| Mn | 3 | < = 20 | 2 | < = 5 | < 100 |
| Ti | 132 | < = 200 | 103 | < = 150 | 5600 |
| A1 | 521 | < = 600 | 350 | < = 350 | 780 |
| Zr | 3 | < = 80 | < 3 | < = 3 | < 100 |
| V | 0.5 | < = 5 | < 0.5 | < = 1 | < 500 |
| | | | | | |
| | Σ 1257 ppb = 1.26 ppm | Σ 3255 ppb = 3.2 ppm | Σ 964 ppb = 0.96 ppm | Σ 1033 ppb = 1.03 ppm | Σ 9080 ppb = 9.08 ppm |

Measuring method

The pyrogenically prepared silicon dioxides which are obtained are analysed as to their metal content. The samples are dissolved in an acid solution which comprises predominantly HF.

The $SiO_2$ reacts with the HF, forming $SiF_4$ + $H_2O$. The $SiF_4$ evaporates, leaving behind completely in the acid the metals which are to be determined. The individual samples are diluted with distilled water and analysed against an internal standard by inductively coupled plasma-atomic emission spectroscopy (ICP-AES) in a Perkin Elmer Optima 3000 DV. The imprecision of the values is the result of sample variations, spectral interferences and the limitations of the measuring method. Larger elements have a relative imprecision of $\pm$ 5%, while the smaller elements have a relative imprecision of $\pm$ 15%.

**Claims**

1. A method for producing a fused glass article comprising the steps of:

   a) compacting metal oxide or metalloid oxide to granules having a mean particle size less than about one millimeter;
   b) optionally sintering the granules at a temperature less than about 1.100 °C, the density of the granules after sintering being approximately equal to their maximum theoretical density;
   c) forming a green body from the granules or mixture of the granules according to step a) and/or step b), wherein theses granules can be sintered granules using uniaxial, cold isostatic and hot isostatic powder pressing, slip casting, extrusion, moulding and injection moulding;
   d) optionally drying and partial sintering the green body in a chamber by (i) raising the temperature of the chamber optionally to above about 1000 °C, and (ii) optionally introducing chlorine gas into the chamber and/or subjecting the chamber to a vacuum and/or purging the chamber with an inert gas; and

e) optionally fully sintering the green body in a chamber by raising the temperature of the chamber within a temperature range from about 1.200°C to a temperature above about 1.720 °C while optionally purging the chamber with helium or applying a vacuum to the chamber.

2. The method of claim 1 including the additional step after step (e) of hot isostatic pressing the fully sintered green body in a chamber by raising the temperature of the chamber to above about 1.150 °C and introducing an inert gas into the chamber at a pressure above about 100 psig (6,895 bar).

3. Method according to claim 1, **characterised in that** the metal oxide or metalloid oxide is a pyrogenic silicon dioxide powder with

   - a BET surface area of 30 to 90 $m^2/g$,
   - a DBP index of 80 or less
   - a mean aggregate area of less than 25000 $nm^2$,
   - a mean aggregate circumference of less than 1000 nm, wherein at least 70% of the aggregates have a circumference of less than 1300 nm.

4. Method according to claim 1, **characterised in that** the metal oxides or metalloid oxides is a high-purity pyrogenically prepared silicon dioxide, **characterised by** a metal content of less than 9 ppm.

5. Method according to claim 4, **characterised in that** the metal oxide or metalloid oxide is a high-purity pyrogenically prepared silicon dioxide, **characterised by** the following metal contents:

| Li | ppb | < = 10 |
|----|-----|--------|
| Na | ppb | < = 80 |
| K  | ppb | < = 80 |
| Mg | ppb | < = 20 |
| Ca | ppb | < = 300 |
| Fe | ppb | < = 800 |
| Cu | ppb | < = 10 |
| Ni | ppb | < = 800 |
| Cr | ppb | < = 250 |
| Mn | ppb | < = 20 |
| Ti | ppb | < = 200 |
| Al | ppb | < = 600 |
| Zr | ppb | < = 80 |
| V  | ppb | < = 5 |

**European Patent Office**

## EUROPEAN SEARCH REPORT

Application Number

EP 05 00 5091

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 304 313 A (DEGUSSA AG) 23 April 2003 (2003-04-23) * the whole document * ----- | 1-5 | C03B19/06 C03B32/00 C01B33/18 |
| A | EP 1 074 513 A (DEGUSSA AG) 7 February 2001 (2001-02-07) * the whole document * ----- | 3-5 | |
| A | EP 0 725 037 A (DEGUSSA-HUELS AKTIENGESELLSCHAFT) 7 August 1996 (1996-08-07) * the whole document * ----- | 3-5 | |

TECHNICAL FIELDS SEARCHED (Int.Cl.7)

C03B

The present search report has been drawn up for all claims

| Place of search | Date of completion of the search | Examiner |
|---|---|---|
| The Hague | 28 July 2005 | Stroud, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 00 5091

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2005

| Patent document cited in search report | | Publication date | Patent family member(s) | | Publication date |
|---|---|---|---|---|---|
| EP 1304313 | A | 23-04-2003 | EP | 1304313 A1 | 23-04-2003 |
| | | | JP | 2003137571 A | 14-05-2003 |
| | | | US | 2003131627 A1 | 17-07-2003 |
| EP 1074513 | A | 07-02-2001 | DE | 19936478 A1 | 15-02-2001 |
| | | | CA | 2314804 A1 | 03-02-2001 |
| | | | EP | 1074513 A2 | 07-02-2001 |
| | | | JP | 2001072427 A | 21-03-2001 |
| | | | JP | 2004161611 A | 10-06-2004 |
| | | | NO | 20003914 A | 05-02-2001 |
| | | | SG | 85204 A1 | 19-12-2001 |
| EP 0725037 | A | 07-08-1996 | DE | 19601415 A1 | 08-08-1996 |
| | | | CA | 2168677 A1 | 05-08-1996 |
| | | | CN | 1134399 A ,C | 30-10-1996 |
| | | | DE | 59606530 D1 | 12-04-2001 |
| | | | EP | 0725037 A1 | 07-08-1996 |
| | | | ES | 2154748 T3 | 16-04-2001 |
| | | | IN | 186494 A1 | 15-09-2001 |
| | | | JP | 3095989 B2 | 10-10-2000 |
| | | | JP | 8253309 A | 01-10-1996 |
| | | | KR | 190472 B1 | 01-06-1999 |
| | | | PT | 725037 T | 31-07-2001 |
| | | | SG | 42921 A1 | 17-10-1997 |
| | | | US | 5776240 A | 07-07-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2041913 A, Matsuyama
- US 3535890 A, Hansen
- US 3678144 A, Shoup
- US 4112032 A, Blaszyk
- US 4042361 A, Bihuniak
- US 4200445 A
- US 4574063 A, Scherer
- EP 84438 A
- US 3310392 A, Rhodes
- US 3562371 A, Bush
- US 4358306 A, Okamoto

- US 4414014 A, Bruning
- GB 2086369 A
- US 5776240 A
- DE 19601415 A1
- WO 2004054929 A
- DE 10030251
- DE 10030252
- US 2942991 A
- US 4349333 A

**Non-patent literature cited in the description**

- **SCHERER et al.** Glasses from Colloids. *Journal of Non-Crystalline Solids,* 1984, vol. 63, 163-172
- Ullmanns Enzyklopädie der technischen Chemie. 1982, vol. 21, 464
- **W. D. KINGERY.** Introduction to Ceramics. John Wiley and Sons, Inc, 1960

- Ceramic Processing Before Firing. John Wiley and Sons, Inc, 1978
- **WHITEWAY et al.** Slip Casting Magnesia. *Ceramic Bulletin,* 1961, vol. 40, 432-435